Europäisches Patentamt

(19) European Patent Office

Office européen des brevets

(11) Publication number: **0 010 811**
A1

(12) **EUROPEAN PATENT APPLICATION**

(21) Application number: **79200621.5**

(22) Date of filing: **25.10.79**

(51) Int. Cl.³: **H 02 H 7/10, H 02 H 3/20, H 02 M 1/18, G 05 F 1/58**

---

(30) Priority: **28.10.78 GB 4235878**

(43) Date of publication of application: **14.05.80**
**Bulletin 80/10**

(84) Designated Contracting States: **AT BE CH DE FR IT NL SE**

(71) Applicant: **WESTINGHOUSE BRAKE AND SIGNAL COMPANY LIMITED, 3 John Street, London WC1N 2ES (GB)**

(72) Inventor: **King, Kenneth Gordon, Westinghouse Brake and Signal Company Limited, Chippenham, Wiltshire SN15 1JD (GB)**
Inventor: **Burch, Derek Ernest, Westinghouse Brake and Signal Company Limited, Chippenham, Wiltshire SN15 1JD (GB)**

(74) Representative: **Turner, Alan Reginald, Westinghouse Brake And Signal Company Limited, Chippenham, Wiltshire, SN15 1JD (GB)**

---

(54) **Switching transistor over-voltage protection means.**

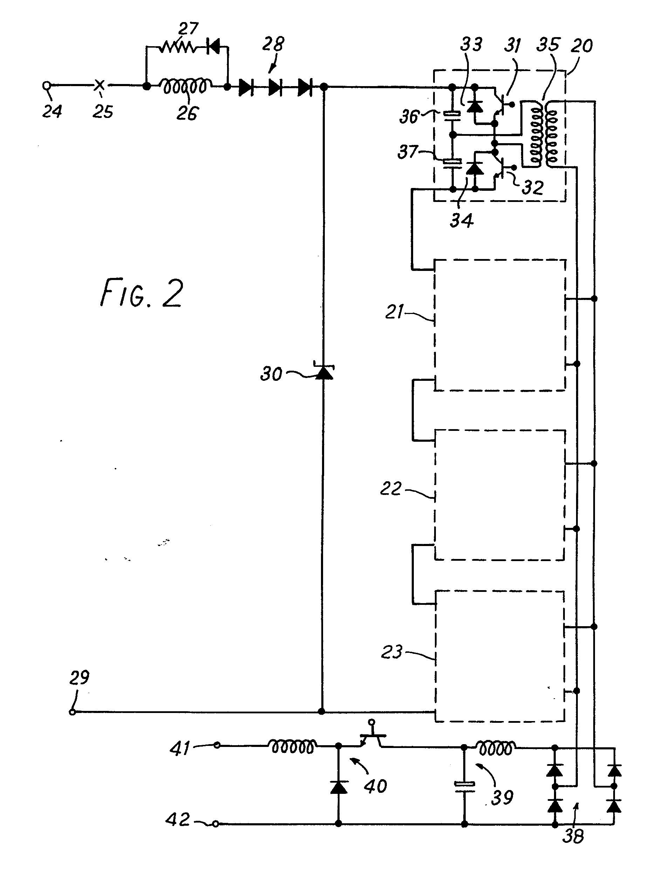

(57) In over-voltage protection means for use in a transistor inverter (20), in which at least two normally alternatively operable transistors (31, 32, fig. 2) are connected across an input voltage line (24, fig. 2) subject to over-voltage surges and transients, over-voltage sensing means (52, fig. 3) is arranged to detect or anticipate over-voltage excursions, temporarily inhibit normal switching of the transistors (31, 32) for the duration of the excursion, and switch the transistors to a non-conducting state. The inverter (20) is thus able to assume an effective voltage rating of twice its normal rating.

The invention relates to switching transistor over-voltage protection means and particularly, but not exclusively, to means for protecting the transistors in transistor converters and inverters.

In situations where it is desirable under normal circumstances to operate transistors at voltages close to their maximum ratings, problems arise when over-voltage surges occur, insofar as the transistors are not capable of withstanding the transient high voltages.

The present invention seeks to overcome this problem by providing means responsive to an over-voltage surge to temporarily inhibit normal operation of the transistors and switch them into the mode most able to withstand the excessively high voltage. Thus, where at least two such switching transistors are connected in series between a supply voltage line and a current return path and an over-voltage surge is detected or predicted, the transistors are both switched into a blocking state so that the supply voltage is developed across the series combination of transistors.

According to the invention, switching transistor over-voltage protection means for a series combination of at least two alternatively operable switching transistors connected to a supply voltage line subject to over-voltage surges comprises, over-voltage sensing means having a sensing input connected to the supply voltage line and an output or outputs arranged, when energised, to block normal operation of the switching

transistors, the sensing means being operative in response to a voltage surge on the supply voltage line in excess of a predetermined safe threshhold to energise the outputs and automatically block normal operation of the transistors by switching them to a non-conducting state until the voltage returns to a safe level.

In one embodiment of the invention, the over-voltage protection means includes in the sensing input connected to the supply voltage line a rate-responsive network whereby the sensing means is additionally sensitive to the rate of rise of the supply voltage to predict the occurrence of an over-voltage surge.

Further features of the invention will be apparent from the following description of a preferred embodiment wherein reference will be made to the accompanying drawings, in which:

Fig. 1 shows a circuit diagram of a typical converter arrangement for producing low-voltage d.c. from a three-phase mains supply,

Fig. 2 shows a converter arrangement, employing series connected inverter modules, to supply a train battery charging current from 1500 volts d.c. traction supply, and

Fig. 3 shows in diagrammatic form an over-voltage protection circuit.

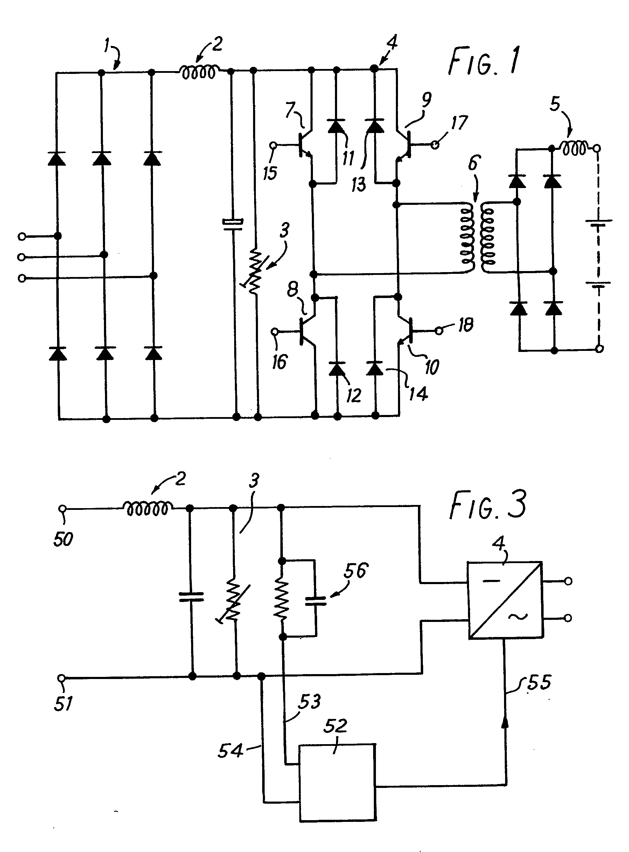

The three-phase mains to low voltage d.c. converter
of Fig. 1 basically consists of a three-phase input
rectifier, generally indicated at 1, a smoothing filter 2,
surge suppressing impedance 3 a full wave inverter bridge 4
and output rectifier 5 connected to the output terminals
of inverter bridge 4 by means of transformer 6.  If
the converter is connected to a 415 volt three-phase mains
supply the rectified and smoothed input voltage to the
inverter bridge 4 may reach 594 volts (=415 volt x 1.06 x
1.35) without exceeding normal variation limits.  Further
if the converter is supplying only a light load the output
voltage of rectifier 1 will tend to approach the peak
supply voltage and could easily rise to 620 volts.
A suitable switching power transistor would be expected
to possess a  fast switching speed, low conducting·
voltage-drop and a voltage rating sufficiently in excess
of this voltage to allow an adequate safety margin.  Such
transistors have a maximum collector voltage rating
(VcBO) of approximately 750 volts which leaves a safety
margin of only 20% above 620 volts.

In a converter circuit such as that shown in Fig. 1
it is usual to employ a full-bridge or half-bridge
inverter circuit.  While the inverter 4 is operating,
in each pair of transistors 7, 8 and 9, 10 constituting
a circuit branch directly across the d.c. supply, one
or the other is conducting or one of the diodes 11, 12,
13 or 14 is carrying reactive current from the load,
which in Fig. 1 arises from the leakage inductance of
the transformer.  Thus, one of each pair of transistors 7, 8 and 9,10, in the non-conducting state, supports the whole of the d.c. supply voltage. However, when the inverter 4 is inoperative the supply voltage is supported by both transistors in each branch so that the inverter has an inherent capability of withstanding an input voltage of up to twice the rating of each transistor.

In normal operation of the inverter 4 the transistors 7, 8, 9 and 10 are driven by synchronous switching signals applied through base leads 15, 16, 17 and 18 respectively. According to the present invention when an over-voltage surge is detected these normal switching signals are inhibited and the base leads 15, 16, 17 and 18 are all biased to hold the transistors in a non-conducting state. The over-voltage sensing and transistor control circuits are described below with reference to Fig. 3.

Fig. 2 shows another example of converter, to which the invention may be applied, for mounting in railway rolling stock to provide a relatively low voltage output to charge a battery from a 1500 volt d.c. traction supply. In this case, for assistance in withstanding the high input voltage, four transistor inverter modules 20, 21, 22 and 23 are connected in series. The 1500 volt input terminal 24 is connected to the vehicle positive rail brushgear (not shown) and to the inverter module inputs through d.c. circuit breaker 25, filter choke 26, in parallel with an overshoot limiter 27, and input diodes 28. The current path through the inverter modules 20, 21, 22 and 23 is completed through terminal 29 to the return rail brushgear (not shown). In parallel with the inverter modules is a surge limiting zener diode 30 arranged to limit surge voltages in excess of the zener breakdown voltage. However, it is not normally practicable to limit overvoltages of less than approximately 50% above maximum normal voltage in this way.

Each of the inverter modules comprises a half-bridge transistor inverter circuit, only one of which, module 20, is shown in circuit diagram form. Each inverter circuit includes two series transistors 31, 32, each with a parallel diode 33, 34 respectively, and an output transformer 35. One terminal of the primary of transformer 35 is connected to the junction between transistors 31 and 32 and the other terminal to the junction between two capacitors 36, 37 connected in series between the input terminals of the inverter. The secondary windings of all the inverter output transformers are connected in parallel to the input terminals of a bridge rectifier, indicated generally at 38. The output of rectifier 38 is connected through a smoothing circuit 39, and transistor chopper regulator circuit 40 to battery charging output terminals 41, 42 the available charging output being 120 volts 50 amps at nominal ratings.

In operation of the converter of Fig. 2 the transistors 31 and 32 are alternately switched, by signals from a control circuit (not shown), to provide the necessary alternating voltage input for the step-down transformers 35.

Again, at times when any one or the other of the transistors 31,32 is conducting, one of the diodes 33, 34 is carrying reactive current from the load. Thus, one transistor from each of the inverter modules in series support, between them, the whole of the supply voltage.

In such a battery charger it is economically advantageous not to over-rate the transistors solely to provide an adequate over-voltage safety margin if an alternative form of protection is cheaply available. According to the invention when an over-voltage surge is detected the normal switching signals to transistors 31, 32 are inhibited and transistors are temporarily biased to the non-conducting state so that the supply voltage is supported by all the switching transistors in series, which in this case would number eight as against four without the embodiment of the invention. The over-voltage sensing and transistor control means are also as shown and described below with reference to Fig. 3.

In Fig.3, the reference numerals of Fig. 1 are used again to denote like parts, although the parallel relationship to the circuit of Fig. 2 will be easily recognised and understood. A d.c. supply, e.g. the output of a rectifier stage, is connected to the supply terminals 50, 51. The input filter 2 attenuates low-energy input surges and limits the rate of rise of voltage at the input to the inverter 4, thereby affording time, in the event of a large input surge occurring, for transient conditions in the inverter to decline so that the transistors (not shown ) can assume their full blocking capability on being switched to that state by an over-voltage sensing means 52. Inputs 53, 54 to the sensing means 52 are connected to the d.c. supply lines from terminals 50, 51 respectively. When an excessive voltage is detected by the sensing means 52, it transmits a blocking signal via line 55 to the inverter 4 to initiate and control the blocking action.

The input 53 is connected through a rate-responsive network, generally indicated at 56, so that the sensing means may additionally respond to the rate of rise of the d.c. supply voltage so that blocking may be initiated in anticipation of a high-voltage surge.

In the converters described above, the rectifying means employed are full-wave arrangements. However, as will be readily appreciated, such full-wave rectifiers may be replaced by appropriate half-wave arrangements.

Claims:

1. Switching transistor over-voltage protection means for a series combination of at least two alternatively operable switching transistors (7, 8 and 9, 10 Fig. 1: 33, 34 Fig. 2) connected to a supply voltage line (24, Fig. 2) subject to over-voltage surges comprises, over-voltage sensing means (52, Fig. 3) having a sensing input (53, 54) connected to the supply voltage line (24) and an output (55) or outputs arranged, when energised, to block normal operation of the switching transistors (7, 8 and 9, 10: 31, 32), the sensing means (52) being operative in response to a voltage surge on the supply voltage line (24) in excess of a predetermined safe threshold to energise the outputs (55) and automatically block normal operation of the transistors (7, 8 and 9, 10: 31, 32) by switching them to a non-conducting state until the voltage returns to a safe level.

2. Over-voltage protection means according to Claim 1, wherein the sensing means (52) includes in the sensing input (53) connected to the supply voltage line (50) a rate-responsive network (56) whereby the sensing means (52) is additionally sensitive to the rate of rise of the supply voltage to predict the occurrence of an over-voltage surge.

3. Over-voltage protection means according to Claim 2, the rate-responsive network (56) comprises a two-terminal network consisting of a parallel resistor and capacitor combination connected in series with the voltage sensing input (53).

4. A converter (Fig. 1: Fig. 2) for operation from an a.c. supply to provide a d.c. output voltage comprising input rectifying means (1, Fig. 1) adapted for connection to an a.c. source and connected to supply inverter means (4, Fig. 1: 20, 21, 22, 23, Fig. 2) including at least two alternatively operable series connected switching transistors (7, 8 and 9, 10), output rectifying means (5) connected to receive an inverter output voltage to supply the d.c. output voltage, and characterised in that there is further included over-voltage protection means (Fig. 3) according to any preceding claim, connected so as to be capable of blocking normal operation of the switching transistors (7, 8 and 9, 10).

5. A converter according to Claim 4, wherein the inverter means (20, 21, 22, 23, Fig. 2) comprises a half-wave bridge arrangement (31, 32, 33, 34, Fig. 2).

6. A converter according to Claim 4, wherein the inverter means (4, Fig. 1) comprises a full-wave bridge arrangement (7, 8, 9, 10, 11, 12, 13, 14, Fig. 1).

7. A converter according to any of Claims 4, 5 or 6, wherein the rectifying means (1, 5, Fig. 1: 38, Fig.2) comprise half-wave arrangements.

8. A converter according to any of Claims 4, 5 or 6, wherein the rectifying means (1, 5, Fig. 1: 38, Fig. 2) comprise full-wave arrangements.

9. A converter (Fig. 1) according to Claim 7 or 8, wherein the input rectifying means (1, Fig. 1) is adapted for use with a multi-phase a.c. supply.

10. A converter (Fig. 2) for operation from a first input d.c. voltage to provide a second output d.c. voltage comprising, a plurality of inverter modules (20, 21, 22, 23)

- 3 -

each including at least two alternatively operable series connected switching transistors (31, 32), the inputs of the modules (20, 21, 22, 23) being connected to receive a first input d.c. voltage and the outputs being connected to output rectifying means (38) to provide a second output d.c. voltage, and characterised in that there is further included over-voltage protection means (Fig. 3) according to any of Claims 1 - 3 connected so as to be capable of blocking normal operation of the switching transistors (31, 32).

FIG. 1

FIG. 3

Fig. 2

0010811

European Patent Office

**EUROPEAN SEARCH REPORT**

Application number

EP 79 200 621.5

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| X | <u>US - A - 3 206 695</u> (E.Y. BENNETT, JR.)<br>* complete document *<br><br>-- | 1,<br>4-8 | H 02 H 7/10<br>H 02 H 3/20<br>H 02 M 1/18<br>G 05 F 1/58 |
| | <u>DE - A - 2 239 796</u> (GENERAL ELECTRIC)<br>* fig. 1, positions 72, 74; fig. 2,<br>positions 94, 96, 102 *<br><br>-- | 2,3 | |
| | <u>DE - A1 - 2 547 558</u> (S.P. RADIO A/S)<br>* fig. 1 *<br><br>-- | 10 | **TECHNICAL FIELDS SEARCHED (Int.Cl.)**<br><br>G 05 F 1/58 |
| A | <u>DE - C - 1 144 824</u> (N.V. PHILIPS)<br>* column 1, line 1 to column 2,<br>line 43 *<br><br>-- | | H 02 H 3/20<br>H 02 H 7/10<br>H 02 H 7/122<br>H 02 M 1/18<br>H 02 M 3/335 |
| A | <u>DE - B - 1 212 628</u> (GLOBE INDUSTRIES)<br>* column 1, line 1 to column 2, line<br>42; fig. 1 *<br><br>----- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 24-01-1980 | LEMMERICH |

EPO Form 1503.1 06.78